# EUROPEAN PATENT APPLICATION

(11) **EP 2 640 118 A1**
(43) Date of publication of application: **18.09.2013**
(21) Application number: 11840214.8
(22) Date of filing: 03.10.2011
(51) Int. Cl.: H04W 28/04, H04J 1/00, H04J 11/00

(54) **MOBILE TERMINAL DEVICE AND COMMUNICATION CONTROL METHOD**

(30) Priority: 08.11.2010 JP 2010250156
(71) Applicant: NTT DOCOMO, INC., Chiyoda-ku Tokyo 100-6150 (JP)
(72) Inventor: OOKUBO, Naoto, Tokyo 100-6150 (JP); ISHII, Hiroyuki, Tokyo 100-6150 (JP); ABE, Tetsushi, Tokyo 100-6150 (JP); KISHIYAMA, Yoshihisa, Tokyo 100-6150 (JP); TAKEDA, Kazuaki, Tokyo 100-6150 (JP)
(74) Representative: HOFFMANN EITLE
(86) International application number: PCT/JP2011/072759
(87) International publication number: WO 2012/063574

(57) **Abstract**

To prevent a situation that communication operation becomes unstable resulting from erroneous detection of a PDCCH in a mobile communication system having a system band comprised of a plurality of base frequency blocks, in a mobile terminal apparatus (10) provided with a downlink control signal decoding section (104) conf igured to determine radio resources designated by ARI (ACK/NACK Resource Indicator) fields of PDCCHs assigned to a plurality of base frequency blocks (CCs), and a retransmission response signal transmission control section (105) configured to control transmission of retransmission response signals in response to PDSCHs assigned to a plurality of base frequency blocks (CCs) based on the radio resources designated by the ARI fields, the retransmission response signal transmission control section (105) limits transmission of retransmission response signals in response to PDSCHs assigned to all the base frequency blocks (CCs) when the radio resources designated by a plurality of the ARI fields include a different radio resource.

## Description

### TECHNICAL FIELD

The present invention relates to a mobile terminal apparatus and communication control method in the next-generation mobile communication system.

### BACKGROUND ART

In UMTS (Universal Mobile Telecommunications System) networks, for the purpose of improving spectral efficiency, peak data rates, etc. , by adopting HSDPA (High Speed Downlink Packet Access) and HSUPA (High Speed Uplink Packet Access), it is performed exploiting maximum features of the system based on W-CDMA (Wideband Code Division Multiple Access). For the UMTS network, for the purpose of further increasing spectral efficiency and peak data rates, reducing delay and the like, Long Term Evolution (LTE) has been studied (for example, see Non-patent Document 1). InLTE, as distinct from W-CDMA, as a multiple access scheme, the scheme based on OFDMA (Orthogonal Frequency Division Multiple Access) is used in downlink, and the scheme based on SC-FDMA (Single Carrier Frequency Division Multiple Access) is used in uplink.

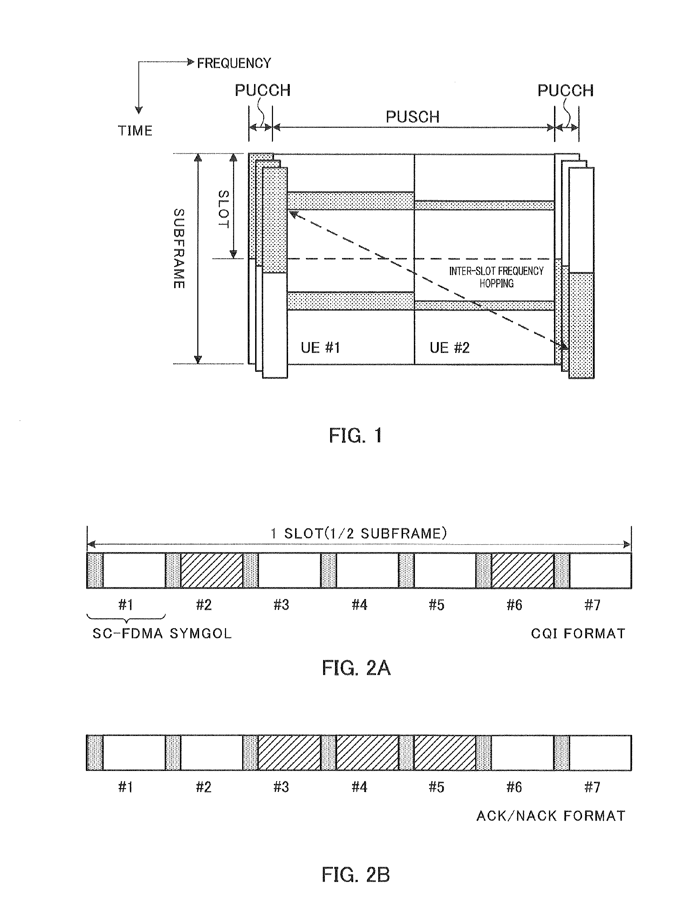

As shown in FIG. 1, signals transmitted in uplink are mapped to appropriate radio resources, and are transmitted from a mobile terminal apparatus to a radio base station apparatus. In this case, user data (UE (User Equipment) #1, UE #2) is assigned to the uplink shared channel (PUSCH: Physical Uplink Shared CHannel). Meanwhile, control information is time-multiplexed with the PUSCH when the control information is transmitted concurrently with the user data, and when only the control information is transmitted, is assigned to the uplink control channel (PUCCH: Physical Uplink Control CHannel). The control information transmitted in uplink includes downlink quality information (CQI: Channel Quality Indicator), retransmission response signal (ACK/NACK) to the signal of the downlink shared channel (PDSCH: Physical Downlink Shared CHannel), etc.

In the PUCCH, typically, different subframe configurations are adopted between the case of transmitting the CQI and the case of transmitting ACK/NACK (see FTGs. 2A and 2B). In the subframe configuration of the PUCCH, one slot (1/2 subframe) contains 7 SC-FDMA symbols. Further, one SC-FDMA symbol contains 12 information symbols (subcarriers). More specifically, as shown in FIG. 2A, in the subframe configuration (CQI format (PUCCH formats 2, 2a, 2b)) of the CQI, a reference signal (RS) is multiplexed into a second symbol (#2) and sixth symbol (#6), and the control information (CQI) is multiplexed into the other symbols (first symbol (#1), third symbol (#3) to fifth symbol (#5), seventh symbol (#7)) in a slot. Meanwhile, as shown in FIG. 2B, in the subframe configuration (ACK/NACK format (PUCCH formats 1, 1a, 1b)) of ACK/NACK, a reference signal is multiplexed into third symbol (#3) to fifth symbol (#5), and the control information (ACK/NACK) is multiplexed into the other symbols (first symbol (#1), second symbol (#2), sixth symbol (#6), seventh symbol (#7)) in a slot. In one subframe, the slot is repeated twice. Further, as shown in FIG. 1, the PUCCH is multiplexed into radio resources at opposite ends of the system band, and frequency hopping (Inter-slot FH) is applied between two slots having different frequency bands in one subframe.

### CITATION LIST

### NON-PATENT LITERATURE

[Non-patent literature 1] 3GPP, TR25.912 (V7.1.0), "Feasibility study for Evolved UTRA and UTRAN", Sept. 2006

### SUMMARY OF THE INVENTION

### TECHNICAL PROBLEM

In the 3G system (W-CDMA), a fixed band of 5 MHz is substantially used, and it is possible to achieve transmission rates of approximately maximum 2 Mbps in downlink. Meanwhile, in the LTE system, using variable bands ranging from 1.4 MHz to 20 MHz, it is possible to achieve transmission rates of maximum 300 Mbps in downlink and about 75 Mbps in uplink. Further, in the UMTS network, for the purpose of further improving spectral efficiency, peak data rates, etc. a successor system to LTE has been studied (for example, also called "LTE Advanced" or "LTE enhancement" (hereinafter, referred to as LTE-A)).

In LTE-A systems, for the purpose of further improving spectral efficiency, peak throughput, etc. assignments of frequencies with wider bands than in LTE systems have been studied. Further, in LTE-A (for example, Rel. 10) systems, having Backward compatibility with LTE systems is one of requirements, and therefore, adopted is a configuration of a system band with a plurality of base frequency blocks (component carriers: CC) each having a bandwidth capable of being used in LTE systems. Therefore, in LTE-A systems, it is necessary to transmit feedback control information on downlink shared channels (PDSCHs, hereinafter, referred to as "data channels" as appropriate) transmitted by a plurality of downlink CCs.

Particularly, in uplink of LTE-A systems, application of SC-FDMA is studied as a radio access scheme. Therefore, in the feedback control information on data channels transmitted by a plurality of downlink CCs, in order to maintain characteristics of uplink single-carrier transmission, it is required to transmit only from a single CC. In radio resources for the feedback control information, a part or the whole thereof are designated by the downlink control channel (PDCCH: Physical Downlink Control CHannel). Therefore, when the mobile terminal apparatus erroneously detects the downlink control channel (PDCCH), it is not possible to transmit the feedback control information on the data channel to the radio base station apparatus, and such a situation is conceived that communication operation becomes unstable.

The present invention was made in view of such a respect, and it is an object of the invention to provide a mobile terminal apparatus and communication control method for enabling a situation that communication operation becomes unstable resulting from erroneous detection of a PDCCH from being prevented in a mobile communication system having a system band comprised of a plurality of base frequency blocks.

### SOLUTION TO PROBLEM

A mobile terminal apparatus of the invention is a mobile terminal apparatus for performing radio communications with a system band comprised of a plurality of base frequency blocks, and is characterized by having a determination section configured to determine radio resources designated by ARI (ACK/NACK Resource Indicator) fields of downlink control channel signals assigned to the plurality of base frequency blocks, and a control section configured to control transmission of retransmission response signals in response to downlink shared channel signals assigned to the plurality of base frequency blocks based on the radio resources designated by the ARI fields, where when the radio resources designated by a plurality of the ARI fields include a different radio resource, the control section limits transmission of the retransmission response signals in response to downlink shared channel signals assigned to all the plurality of base frequency blocks.

According to this configuration, in the case where different radio resources are included in the radio resources designated by a plurality of ARI fields, retransmission response signals in response to downlink shared channel signals assigned to all base frequency blocks are not transmitted, and therefore, the radio base station apparatus is capable of determining that downlink control channels are correctly not received in all the base frequency blocks. In this case, since the radio base station apparatus retransmits downlink shared channel signals for all the base frequency blocks, the mobile terminal apparatus is capable of receiving downlink shared channel signals in all the base frequency blocks again, and is thereby capable of continuing communication operation stably.

### TECHNICAL ADVANTAGE OF THE INVENTION

According to the invention, it is possible to prevent the situation that communication operation becomes unstable resulting from erroneous detection of a PDCCH in a mobile communication system having a system band comprised of a plurality of base frequency blocks.

### BIREF DESCRIPTION OF DRAWINGS

FIG. 1 is a diagram to explain a channel configuration with mapping of uplink signals;
FIG. 2 contains diagrams illustrating physical uplink control channel formats;
FIG. 3 is a schematic diagram to explain radio resources for a retransmission response signal in an LTE (Rel. 8) system;
FIG. 4 is a schematic diagram to explain radio resources for retransmission response signals in an LTE-A system;
FIG. 5 is a flow diagram to explain processing when a mobile terminal apparatus transmits or limits retransmission response signals in a communication control method according to a fourth aspect of the invention;
FIG. 6 is a diagram to explain a configuration of a mobile communication system having mobile terminal apparatuses and radio base station apparatus according to one Embodiment of the invention;
FIG. 7 is a diagram illustrating a schematic configuration of the mobile terminal apparatus according to the Embodiment; and
FIG. 8 is a diagram illustrating a configuration of the radio base station apparatus according to the Embodiment.

### DESCRIPTION OF EMBODIMENTS

As described above, for a signal of the downlink shared channel (PDSCH) of a downlink CC, a retransmission response signal (ACK/NACK) that is feedback control information thereon is transmitted on the uplink control channel (PUCCH). The retransmission response signal is represented by Acknowledgement (ACK) indicating that the PDSCH is suitably received or Negative Acknowledgement (NACK) indicating that the PDSCH is not suitably received.

The radio base station apparatus is capable of detecting transmission success of the PDSCH by Acknowledgement (ACK) or that an error is detected on the PDSCH by Negative Acknowledgement (NACK). Further, the radio base station apparatus is capable of judging that transmission is DTX (Discontinuous Transmission) when reception power of radio resources allocated to a retransmission response signal is a predetermined value or less in uplink. DTX is a judgment result that "neither ACK nor NACK was notified from the mobile terminal apparatus", and this means that the mobile terminal apparatus was not able to receive the downlink control channel (PDCCH). In this case, the mobile terminal apparatus does not detect that the PDSCH is transmitted to the mobile terminal apparatus, and as a result, transmits neither ACK nor NACK. Meanwhile, the radio base station apparatus transmits next new data when ACK is received, while performing retransmission control to retransmit transmitted data in the case of NACK or DTX state with no response.

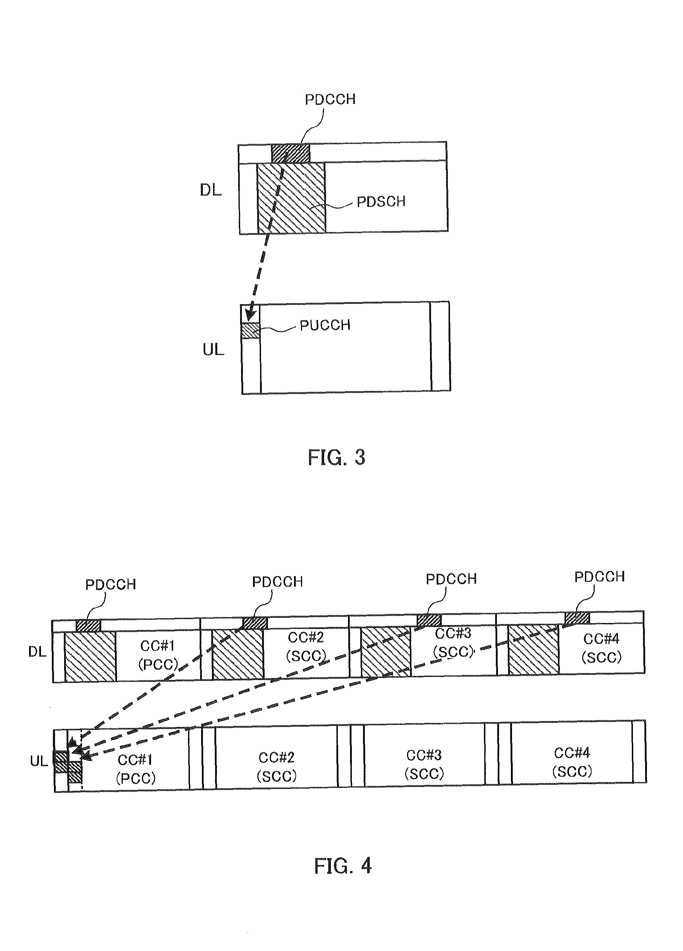

In an LTE (Rel. 8) system, a mobile terminal apparatus is capable of obtaining radio resources for the PUCCH from parameters set by RRC signaling from the higher layer, and the control channel element (CCE) number (hereinafter, referred to as a "CCE index" as appropriate) of the downlink control channel (PDCCH) (see FIG. 3). For example, radio resources for the PUCCH include OCC (Orthogonal Cover), CS (Cyclic Shift) andRB (Resource Block) index. The control information (CQI, ACK/NACK) is multiplexed into thus obtained radio resources of the PUCCH according to the above-mentioned format, and is transmitted to the radio base station apparatus.

In LTE-A systems, for the purpose of further improving spectral efficiency, peak throughput and the like, assignment of frequencies with a wider band than in LTE is studied, and adopted is a configuration of a system band having a plurality of base frequency blocks (CCs) having a bandwidth that the LTE system is allowed to use. Therefore, it is conceived that retransmission response signals that are feedback control information on PDSCHs transmitted from a plurality of downlink CCs are also transmitted from a plurality of uplink CCs.

However, in uplink of LTE-A systems, application of SC-FDMA is studied as a radio access scheme. Therefore, also in the retransmission response signals in response to data channels (PDSCHs) transmitted by a plurality of downlink CCs, in order to maintain characteristics of uplink single-carrier transmission, it is required to transmit only from a single CC. To cope with such a requirement, in LTE-A systems, it is studied that the mobile terminal apparatus generates a retransmission response signal of each CC based on the PDSCH for each of a plurality of CCs received from the radio base station apparatus, and maps the signal to the uplink control channel (PUCCH) of a user specific (UE-specific) CC to transmit.

In LTE-A systems, studied is the PUCCH format (PUCCH format 3) in transmitting the feedback control information on PDSCHs thus transmitted with a plurality of downlink CCs. Herein, the PUCCH format 3 is generated by precoding on a DFT (Discrete Fourier Transform) base as in the PDSCH, and is characterized by multiplexing different UEs by OCC. The mobile terminal apparatus is capable of obtaining radio resources for a retransmission response signal in this PUCCH format 3 using a field (hereinafter, referred to as an "ARI field") for an ARI (ACK/NACK Resource Indicator) provided on the downlink control channel (PDCCH). Herein, the ARI is identification information to designate radio resources for the retransmission response signal.

Hereinafter, described is an allocation method of radio resources for retransmission response signals in an LTE-A system. FIG. 4 is a schematic diagram to explain radio resources for retransmission response signals in an LTE-A system. In addition, FIG. 4 shows the case that a transmission band is comprised of four CCs (CC#1 to CC#4). Further, FIG. 4 shows the case that the CC#1 forms a first base frequency block (PCC: Primary Component Carrier) of a mobile terminal apparatus targeted for transmission, and CC#2 to CC#4 form a second base frequency block (SCC: Secondly Component Carrier).

In the LTE-A system, in the case of allocating radio resources for retransmission response signals, first, a plurality of (for example, 4) radio resources are allocated to each mobile terminal apparatus by RRC signaling from the higher layer. Further, on the PDCCH for the PDSCH of the SCC, the TPC command field (2 bits) is replaced with the ARI field. In the ARI field, among a plurality of radio resources allocated by RRC signaling, one radio resource for the mobile terminal apparatus to use is designated. In the mobile terminal apparatus, among a plurality of radio resources allocated by RRC signaling, by specifying the radio resource designated in the ARI field, it is possible to obtain the radio resource for the retransmission response signal.

Herein, in the ARI field, the same radio resources are designated in all a plurality of SCCs (in FIG. 4, CC#2 to CC#4). By this means, the mobile terminal apparatus is capable of specifying the single radio resource allocated to the mobile terminal apparatus. The retransmission response signal in response to each CC is multiplexed into thus specified radio resource, and it is thereby possible to notify the radio base station apparatus that the PDSCH is suitably received or the PDSCH is not suitably received.

However, in the mobile terminal apparatus, when erroneous detection of the PDCCH occurs, such an event may occur that the mobile terminal apparatus detects that radio resources designated by ARI fields of PDCCHs in a plurality of SCCs are different. In this case, the mobile terminal apparatus is not able to specify the radio resource for the retransmission response signal, is thereby not able to suitably multiplex the retransmission response signal in response to each CC, and becomes difficult to notify the radio base station apparatus that the PDSCH is suitably received or the PDSCH is not suitably received. The inventor of the present invention focused on the respect that communication operation thus becomes unstable resulting from erroneous detection of the PDCCH in a mobile communication system having a system band comprised of a plurality of CCs, and arrived at the invention.

In other words, in a communication control method according to a first aspect of the invention, a mobile terminal apparatus determines radio resources designated by ARI fields of PDCCHs in a plurality of SCCs, and when different radio resources are included in the radio resources designated by a plurality of ARI fields, limits transmission of retransmission response signals (ACK/NACK) in response to PDSCHs assigned to all CCs.

According to the communication control method according to the first aspect, in the case where different radio resources are included in the radio resources designated by a plurality of ARI fields, retransmission response signals are not transmitted, and therefore, the radio base station apparatus is capable of determining that PDCCHs are correctly not received in all CCs (i.e. is capable of determining DTX). In this case, since the radio base station apparatus retransmits PDSCHs for all CCs, the mobile terminal apparatus is capable of receiving PDSCHs in all CCs again, and is thereby capable of continuing communication operation stably.

Further, in a communication control method according to a second aspect of the invention, a mobile terminal apparatus determines radio resources designated by ARI fields of PDCCHs assigned to a plurality of SCCs, and when different radio resources are included in the radio resources designated by a plurality of ARI fields, in the case that the number of SCCs is three or more and that the same radio resources are designated in more than half of the ARI fields, transmits retransmission response signals in response to PDSCHs assigned to all CCs using the radio resources designated in more than half of the ARI fields.

According to the communication control method according to the second aspect, even in the case where different radio resources are included in the radio resources designated by a plurality of ARI fields, retransmission response signals in response to PDSCHs assigned to all CCs are transmitted using the radio resources designated in more than half of the ARI fields under certain conditions, and therefore, the radio base station apparatus is capable of determining that PDCCHs of all CCs are correctly received. In this case, since the radio base station apparatus transmits new PDSCHs for all CCs or retransmits transmitted PDSCHs, the mobile terminal apparatus is capable of receiving new PDSCHs or retransmitted PDSCHs in all CCs, and is thereby capable of continuing communication operation stably.

In addition, in the communication control method according to the second aspect, it is also possible to control transmission of retransmission response signals in combination with the communication control method according to the first aspect. In other words, among the radio resources designated by a plurality of ARI fields, in the case where more than half of the radio resources are the same, retransmission response signals in response to PDSCHs assigned to all CCs are transmitted using the more than half of the radio resources, and in the case where the same radio resources are short of the majority, transmission of retransmission response signals in response to PDSCHs assigned to all CCs is limited. In this case, it is possible to also expect the effect obtained in the communication control method according to the first aspect, and it is further possible to continue communication operation stably.

Further, in a communication control method according to a third aspect of the invention, a mobile terminal apparatus determines radio resources designated by ARI fields of PDCCHs assigned to a plurality of SCCs, and when different radio resources are included in the radio resources designated by a plurality of ARI fields, in the case that the PDCCH of the PCC is suitably received, specifies radio resources for a PUCCH in the same manner as in the LTE (Rel. 8) system to transmit only a retransmission response signal in response to the PDSCH assigned to the PCC. In other words, under certain conditions, the mobile terminal apparatus according to the third aspect transmits only the retransmission response signal in response to the PDSCH assigned to the PCC using the radio resources associated with the PDCCH of the PCC.

According to the communication control method according to the third aspect, even in the case where different radio resources are included in the radio resources designated by a plurality of ARI fields, the retransmission response signal in response to the PDSCH assigned to the PCC is transmitted under certain conditions, and therefore, the radio base station apparatus is capable of determining that the PDCCH only of the PCC is correctly received. In this case, since the radio base station apparatus retransmits transmission signals for all SCCs, the mobile terminal apparatus is capable of receiving PDSCHs in all SCCs again, and is thereby capable of continuing communication operation stably. Further, when the PDSCH of the PCC is suitably received, since the need of retransmission of the PDSCH in the PCC is eliminated, it is possible to improve throughput characteristics as compared with the case of retransmitting PDSCHs for all CCs.

In addition, in the communication control method according to the third aspect, it is possible to control transmission of retransmission response signals in combination with the communication control method according to the first aspect. In other words, in the case of receiving the PDCCH assigned to the PCC, the retransmission response signal in response to the PDSCH assigned to the PCC is transmitted using the radio resource associated with the PDCCH, and in the case of not receiving the PDCCH assigned to the PCC, transmission of retransmission response signals in response to PDSCHs assigned to all CCs is limited. In this case, it is possible to also expect the effect obtained in the communication control method according to the first aspect, and it is further possible to continue communication operation stably.

Further, in a communication control method according to a fourth aspect of the invention, a mobile terminal apparatus transmits or limits retransmission response signals by combining the communication control methods according to the first to third aspects. More specifically, the mobile terminal apparatus determines radio resources designated by ARI fields of PDCCHs assigned to a plurality of SCCs, and when different radio resources are included in the radio resources designated by a plurality of ARI fields, in the case that the number of SCCs is three or more and that the same radio resources are designated in more than half of ARI fields, transmits retransmission response signals in response to PDSCHs assigned to all CCs using the radio resources designated inmore thanhalf of theARI fields. Meanwhile, in the case that the number of SCCs is less than three or that the same radio resources designated in ARI fields are short of the majority, when the PDCCH of the PCC is suitably received, the mobile terminal apparatus specifies radio resources for a PUCCH in the same manner as in the LTE (Rel. 8) system to transmit only a retransmission response signal in response to a PDSCH assigned to the PCC. Further, when the PDCCH of the PCC is not suitably received, the mobile terminal apparatus limits transmission of retransmission response signals (ACK/NACK signals) to the radio base station apparatus.

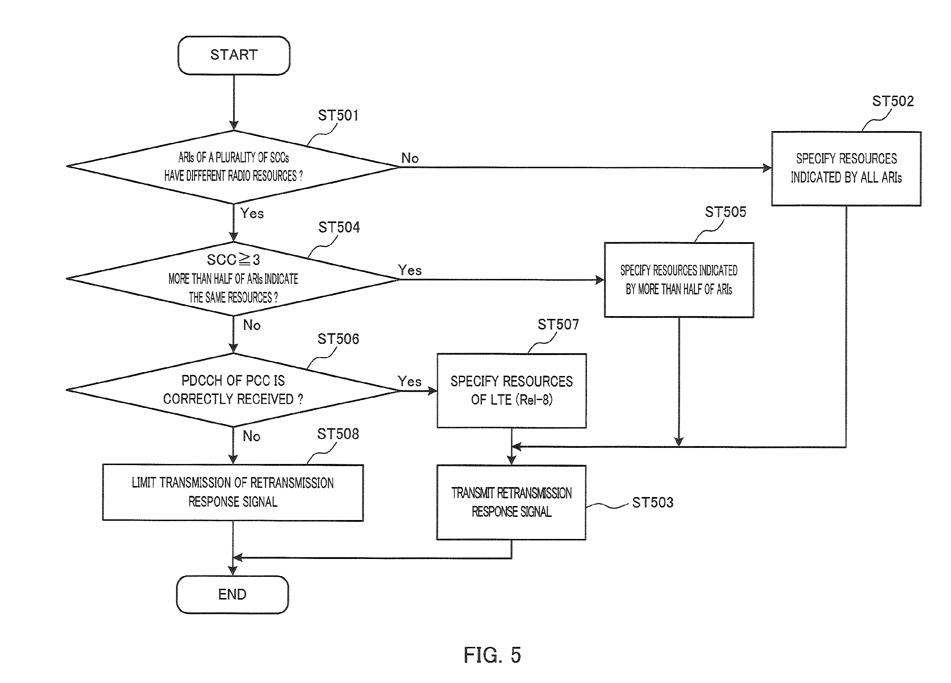

FIG. 5 is a flow diagram to explain processing when a mobile terminal apparatus transmits or limits retransmission response signals in the communication control method according to the fourth aspect of the invention. As shown in FIG. 5, the mobile terminal apparatus determines whether different radio resources are detected as radio resources designated by ARI fields of PDCCHs in a plurality of SCCs (step ST501). Herein, when the same radio resources are designated in the ARI fields of PDCCHs in all the SCCs, the mobile terminal apparatus specifies the radio resources as radio resources for retransmission response signals (step ST502). Then, the mobile terminal apparatus transmits retransmission response signals in response to all CCs using the radio resources (step ST503).

In ST501, when radio resources designated inARI fields of PDCCHs in a plurality of SCCs differ, the mobile terminal apparatus determines whether the number of SCCs is three or more and whether more than half of the radio resources designated in ARI fields of PDCCHs are the same (ST504). Herein, when more than half of the radio resources are the same, the mobile terminal apparatus specifies the radio resources as radio resources for retransmission response signals (stepST505). Then, the mobile terminal apparatus transmits retransmission response signals in response to all CCs using the radio resources (step ST503).

In such a case that the number of SCCs is three or more and that radio resources designated in more than half of the ARI fields are the same, retransmission response signals in response to PDSCHs assigned to all CCs are transmitted using the radio resource, and therefore, the radio base station apparatus is capable of determining that PDCCHs of all CCs are correctly received. Therefore, since the radio base station apparatus transmits new PDSCHs for all CCs or retransmits PDSCHs, the mobile terminal apparatus is capable of receiving new PDSCHs or retransmitted PDSCHs in all CCs, and is thereby capable of continuing communication operation stably.

In addition, in this case, for a retransmission response signal in response to the SCC including the ARI field that designates the radio resource different from radio resources for retransmission response signals, it is preferable to transmit Negative Acknowledgment (NACK). By thus transmitting Negative Acknowledgment (NACK), since the radio base station apparatus retransmits the corresponding PDSCH, it is possible to receive again the PDSCH assigned to the SCC in which erroneous detection of the PDCCH occurs.

In ST504, in the case that the number of SCCs is not three or more or that the radio resources designated in more than half of the ARI fields are not the same, it is determined whether the PDCCH of the PCC is correctly received (ST506). Herein, when the PDCCH of the PCC is correctly received, radio resources of the PUCCH are specified in the same manner as in the LTE (Rel. 8) system (ST507). Then, the retransmission response signal in response to the PCC is only transmitted using the radio resources (ST503).

In also such a case that the number of SCCs is not three or more or that radio resources designated in more than half of the ARI fields are not the same, when the PDCCH of the PCC is correctly received, the retransmission response signal in response to the PCSCH assigned to the PCC is transmitted, and therefore, the radio base station apparatus is capable of determining that the PDCCH only of the PCC is correctly received. Therefore, since the radio base station apparatus retransmits PDSCHs for all SCCs, the mobile terminal apparatus is capable of receiving PDSCHs in all SCCs again, and is thereby capable of continuing communication operation stably. Further, since the need of retransmission of the PDSCH in the PCC is eliminated, it is possible to improve throughput characteristics as compared with the case of retransmitting PDSCHs for all CCs.

In ST506, when the PDCCH of the PCC is not correctly received, transmission of retransmission response signals in all CCs is limited (ST508).

In such a case that the number of SCCs is not three or more or that the same radio resources designated in ARI fields are short of the majority, when the PDCCH of the PCC is not correctly received, transmission of retransmission response signals is limited, and therefore, the radio base station apparatus is capable of determining that PDCCHs are not correctively received in all CCs. Therefore, since the radio base station apparatus retransmits again PDSCHs for all CCs, the mobile terminal apparatus is capable of receiving PDSCHs in all CCs again, and is capable of continuing communication operation stably.

Described below are configurations of the mobile terminal apparatus, radio base station apparatus and the like to which are applied communication control methods according to the invention. Described herein is the case of using a radio base station apparatus and mobile terminal apparatuses that support LTE-A scheme systems (LTE-A systems).

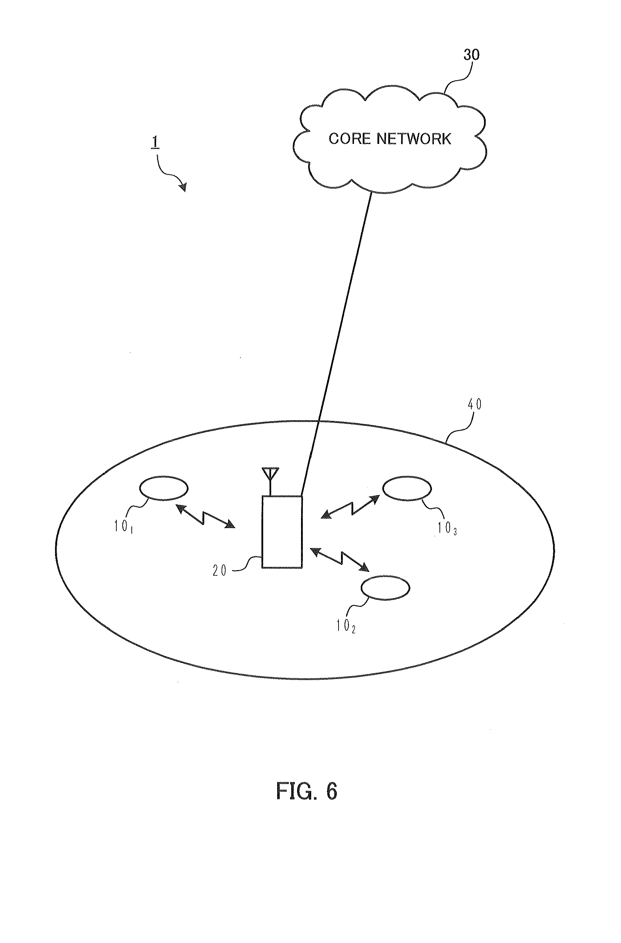

With reference to FIG. 6, described first is a mobile communication system having mobile terminal apparatuses and radio base station apparatus to which are applied communication control methods according to the invention. FIG. 6 is a diagram to explain a configuration of a mobile communication system 1 having mobile terminal apparatuses 10 and radio base station apparatus 20 according to one Embodiment of the invention. In addition, the mobile communication system 1 as shown in FIG. 6 is a system including the LTE system, for example. Further, the mobile communication system 1 may be called IMT-Advanced or may be called 4G.

As shown in FIG. 6, the mobile communication system 1 includes the radio base station apparatus 20 and a plurality of mobile terminal apparatuses 10 (10₁, 10₂, 10₃,...,10ₙ, n is an integer where n>0) that communicate with the radio base station apparatus 20 and is comprised thereof. The radio base station apparatus 20 is connected to a core network 30. The mobile terminal apparatuses 10 communicate with the radio base station apparatus 20 in a cell 40. In addition, for example, the core network 30 includes an access gateway apparatus, radio network controller (RNC), mobility management entity (MME), etc., but is not limited thereto.

In the mobile communication system 1, as a radio access scheme, OFDMA is applied in downlink, and SC-FDMA is applied in uplink. Herein, OFDMA is a multi-carrier transmission scheme for dividing a frequency band into narrow frequency bands (subcarriers), and mapping data to each subcarrier to perform communications. SC-FDMA is a single-carrier transmission scheme for mapping data to contiguous bands for each terminal to perform communications, and actualizes multi-access by a plurality of terminals using mutually different bands.

Described herein are communication channels in LTE systems. In downlink, used are the PDSCH for transmitting traffic data of each mobile terminal apparatus 10, PDCCH for notifying each mobile terminal apparatus 10 of L1/L2 control information such as allocation information of resource blocks (RBs) on the PDSCH, data modulation scheme · channel coding rate and retransmission related information, and the like. Further, reference signals used in channel estimation, reception quality measurement, etc. are transmitted together with the channels.

In uplink, used are the PUSCH for transmitting traffic data of each mobile terminal apparatus 10, PUCCH for transmitting L1/L2 control information such as channel quality information (CQI) report for downlink frequency scheduling and ACK/NACK in response to downlink transmission data, and the like. Further, demodulation reference signals used in channel estimation and channel quality measurement reference signals used in channel quality measurement are transmitted together with the channels.

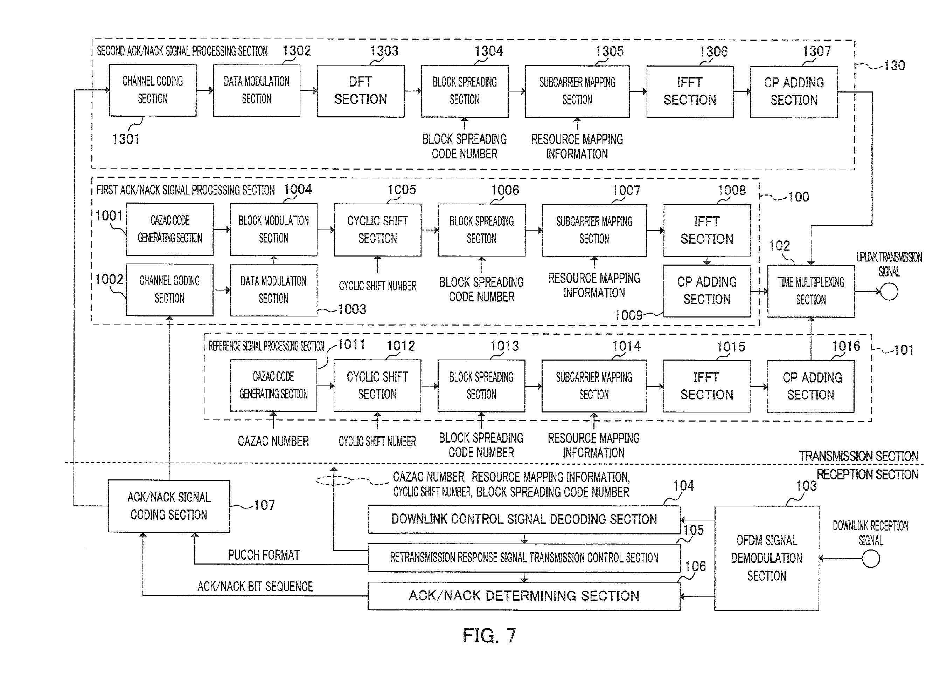

FIG. 7 is a diagram illustrating a schematic configuration of the mobile terminal apparatus 10 according to this Embodiment. The mobile terminal apparatus 10 as shown in FIG. 7 is provided with a transmission section and a reception section. The transmission section is provided with a first ACK/NACK signal processing section 100, second ACK/NACK signal processing section 130, reference signal processing section 101, and time multiplexing section 102 that time-multiplexes the ACK/NACK signal and reference signal. In addition, processing blocks to transmit user data (PUSCH) are not shown in functional blocks of the transmission section in the figure, but the user data (PUSCH) is multiplexed in the time multiplexing section 102.

The first ACK/NACK signal processing section 100 is a portion that performs processing required to transmit a retransmission response signal according to the PUCCH format 1 (1a, 1b) defined in the LTE (Rel. 8) system. For example, in the above-mentioned communication control method according to the third aspect or the fourth aspect, the section 100 performs the processing required to transmit a retransmission response signal in the same manner as in the LTE (Rel. 8) system.

The first ACK/NACK signal processing section 100 has a CAZAC code generating section 1001 that generates a CAZAC code sequence associated with the CAZAC number, a channel coding section 1002 that performs error correcting coding on an ACK/NACK bit sequence, a data modulation section 1003 that performs data modulation, a block modulation section 1004 that block-modulates the generated CAZAC code sequence with the data-modulated signal, a cyclic shift section 1005 that cyclically shifts the block-modulated signal, a block spreading section 1006 that block-spreads the cyclically-shifted signal with a block spreading code (multiplies by an orthogonal code), a subcarrier mapping section 1007 that maps the block-spread signal to subcarriers, an IFFT section 1008 that performs Inverse Fast Fourier Transform (IFFT) on the mapped signal, and a CP (Cyclic Prefix) adding section 1009 that adds a CP to the IFFT-processed signal.

The second ACK/NACK signal processing section 130 is a portion that performs processing required to transmit retransmission response signals according to the PUCCH format 3 defined in the LTE-A system. For example, in the above-mentioned communication control method according to the second aspect or the fourth aspect, the section 130 performs the processing required to transmit retransmission response signals in response to PDSCHs allocated to all CCs using radio resources designated in more than half of ARI fields.

The second ACK/NACK signal processing section 130 has a channel coding section 1301 that performs error correcting coding on an ACK/NACK bit sequence, a data modulation section 1302 that performs data modulation on the ACK/NACK bit sequence, a DFT (Discrete Fourier Transform) section 1303 that performs DFT on the data-modulated signal, a block spreading section 1304 that block-spreads the DFT-processed signal with a block spreading code, a subcarrier mapping section 1305 that maps the block-spread signal to subcarriers, an IFFT section 1306 that performs IFFT on the mapped signal, and a CP adding section 1307 that adds a CP to the IFFT-processed signal.

The reference signal processing section 101 has a CAZAC code generating section 1011 that generates a CAZAC code sequence associated with the CAZAC number, a cyclic shift section 1012 that cyclically shifts the reference signal comprised of the CAZAC code sequence, a block spreading section 1013 that block-spreads the cyclically-shifted signal with a block spreading code, a subcarrier mapping section 1014 that maps the block-spread signal to subcarriers, an IFFT section 1015 that performs IFFT on the mapped signal, and a CP adding section 1016 that adds a CP to the IFFT-processed signal.

In addition, uplink reference signals include SRS (Sounding RS) and RS. The SRS is a reference signal for the radio base station apparatus 20 to estimate a state of an uplink channel of each mobile terminal apparatus 10 required for scheduling (and timing control), and is multiplexed into the last SC-FDMA symbol of the second slot independently of the PUSCH and PUCCH. Meanwhile, the RS is multiplexed into the second symbol and sixth symbol of each slot.

The mobile terminal apparatus 10 determines ACK/NACK on a signal received on the downlink shared channel (PDSCH), and generates an ACK/NACK bit sequence in response to the determination. The generated ACK/NACK bit sequence is coded based on a beforehand defined coding table, and then, is output to the first ACK/NACK signal processing section 100 or the second ACK/NACK signal processing section 130, corresponding to the PUCCH format notified from a retransmission response signal transmission control section 105, described later. More specifically, the ACK/NACK bit sequence is output to the first ACK/NACK signal processing section 100 when the PUCCCH format 1 (1a, 1b) is designated, while being output to the second ACK/NACK signal processing section 130 when the PUCCCH format 3 is designated.

The data modulation section 1003 of the first ACK/NACK signal processing section 100 modulates the ACK/NACK bit sequence subjected to channel coding in the channel coding section 1002 into a signal of polar coordinate component. The data modulation section 1003 outputs the data-modulated signal to the block modulation section 1004. The CAZAC code generating section 1001 prepares a CAZAC code sequence associated with the CAZAC number assigned to the user. The CAZAC code generating section 1001 outputs the generated CAZAC code sequence to the block modulation section 1004. The block modulation section 1004 block-modulates the CAZAC code sequence with the data-modulated control signal for each time block corresponding to one SC-FDMA symbol. The block modulation section 1004 outputs the block-modulated signal to the cyclic shift section 1005.

The cyclic shift section 1005 cyclically shifts the signal in the time domain by a predetermined cyclic shift amount. In addition, the cyclic shift amount varies with each user, and is associated with the cyclic shift number. The cyclic shift section 1005 outputs the cyclically-shifted signal to the block spreading section 1006. The block spreading section 1006 multiplies (block-spreads) the cyclically-shifted reference signal by an orthogonal code (OCC: Orthogonal Cover Code). The block spreading section 1006 outputs the block-spread signal to the subcarrier mapping section 1007.

The subcarrier mapping section 1007 maps the block-spread signal to subcarriers based on resource mapping information. The subcarrier mapping section 1007 outputs the mapped signal to the IFFT section 1008. The IFFT section 1008 performs IFFT on the mapped signal to transform into a signal in the time domain. The IFFT section 1008 outputs the IFFT-processed signal to the CP adding section 1009. The CP adding section 1009 adds a CP to the mapped signal. The CP adding section 1009 outputs the CP-added signal to the time multiplexing section 102.

The data modulation section 1302 of the second ACK/NACK signal processing section 130 modulates an ACK/NACK bit sequence subjected to channel coding in the channel coding section 1301 into a signal of polar coordinate component. The data modulation section 1302 outputs the data-modulated signal to the DFT section 1303. The DFT section 1303 performs DFT on the data-modulated signal to transform into a signal in the frequency domain. The DFT section 1303 outputs the DFT-processed signal to the block spreading section 1304. The block spreading section 1304 multiplies the DFT-processed signal by the orthogonal code (OCC). The block-spreading section 1304 outputs the block-spread signal to the subcarrier mapping section 1305.

The subcarrier mapping section 1305 maps the block-spread signal to subcarriers based on resource mapping information. The subcarrier mapping section 1305 outputs the mapped signal to the IFFT section 1306. The IFFT section 1306 performs IFFT on the mapped signal to transform into a signal in the time domain. The IFFT section 1306 outputs the IFFT-processed signal to the CP adding section 1307. The CP adding section 1307 adds a CP to the mapped signal. The CP adding section 1307 outputs the CP-added signal to the time multiplexing section 102.

The CAZAC code generating section 1011 of the reference signal processing section 101 prepares a CAZAC code sequence associated with the CAZAC number assigned to the user, and uses as a reference signal. The CAZAC code generating section 1011 outputs the reference signal to the cyclic shift section 1012. The cyclic shift section 1012 cyclically shifts the reference signal in the time domain by a predetermined cyclic shift amount. In addition, the cyclic shift amount varies with each user, and is associated with the cyclic shift number. The cyclic shift section 1012 outputs the cyclically-shifted reference signal to the block spreading section 1013.

The block spreading section 1013 multiplies the cyclically-shifted reference signal by an orthogonal code (OCC: Orthogonal Cover Code). Herein, the OCC (block spreading code number) used in the reference signal may be notified from the higher layer by RRC signaling or the like, or the OCC beforehand associated with CS (Cyclic Shift) of data symbol may be used. The block spreading section 1013 outputs the block- spread signal to the subcarrier mapping section 1014.

The subcarrier mapping section 1014 maps the signal in the frequency domain to subcarriers based on resource mapping information. The subcarrier mapping section 1014 outputs the mapped reference signal to the IFFT section 1015. The IFFT section 1015 performs IFFT on the mapped signal to transform into a reference signal in the time domain. The IFFT section 1015 outputs the IFFT-processed reference signal to the CP adding section 1016. The CP adding section 1016 adds a CP to the reference signal multiplied by the orthogonal code. The CP adding section 1016 outputs the CP-added reference signal to the time multiplexing section 102.

The time multiplexing section 102 time-multiplexes the uplink control signal from the first ACK/NACK signal processing section 100 or the second ACK/NACK signal processing section 130 and the reference signal from the reference signal processing section 101 to be a transmission signal including the uplink control channel signal. Thus generated transmission signal is transmitted to the radio base station apparatus 20 in uplink.

The reception section has an OFDM signal demodulation section 103 that demodulates an OFDM signal, a downlink control signal decoding section 104 that decodes a downlink control signal to determine radio resources for a retransmission response signal, a retransmission response signal transmission control section 105 that controls transmission of retransmission response signals based on the radio resources determined in the downlink control signal decoding section 104, an ACK/NACK determining section 106 that determines ACK/NACK from a downlink signal, and an ACK/NACK signal coding section 107.

The OFDM signal demodulation section 103 receives a downlink OFDM signal to demodulate. In other words, the section 103 removes the CP from the downlink OFDM signal, performs Fast Fourier Transform, extracts subcarriers assigned the BCH signal or downlink control signal, and performs data demodulation. The OFDM signal demodulation section 103 outputs the data-demodulated signal to the downlink control signal decoding section 104. Further, the OFDM signal demodulation section 103 outputs the downlink signal to the ACK/NACK determining section 106.

The downlink control signal decoding section 104 constitutes the determination section, decodes the data-demodulated signal, and determines radio resources for the retransmission response signal allocated to the apparatus. More specifically, the downlink control signal decoding section 104 decodes the data-demodulated signal, and as radio resources, obtains the CAZAC number, resource mapping information (including the RB index and ARI), the cyclic shift number, and the block spreading code number. The downlink control signal decoding section 104 outputs these radio resources to the retransmission response signal transmission control section 105.

The retransmission response signal transmission control section 105 constitutes the control section, and controls transmission of retransmission response signals based on radio resources input from the downlink control signal decoding section 104. More specifically, the section 105 selects a transmission method of the retransmission response signal based on the radio resources corresponding to the CC assigned to communications with the radio base station apparatus 20. For example, when a single CC is assigned to communications with the radio base station apparatus 20, the section 105 selects a transmission method of the retransmission response signal based on radio resources associated with the CCE index of the PDCCH of the CC. Meanwhile, when a plurality of CCs is assigned to communications with the radio base station apparatus 20, the section 105 selects a transmission method of the retransmission response signal based on radio resources designated in the ARI field inside the PDCCH of the SCC. Among the designated radio resources, the retransmission response signal transmission control section 105 outputs the CAZAC number to the CAZAC code generating sections 1001 and 1011, outputs the resource mapping information to the subcarrier mapping sections 1007, 1305 and 1014, outputs the cyclic shift number to the cyclic shift sections 1005 and 1012, and outputs the block spreading code number (OCC number) to the block spreading sections 1006, 1304 and 1013.

In this case, when a plurality of SCCs is assigned to communications with the radio base station apparatus 20 and different radio resources are included in radio resources designated by ARI fields of PDCCHs in the SCCs, the retransmission response signal transmission control section 105 selects the transmission method for transmitting or limiting retransmission response signals according to the communication control method according to either of the above-mentioned first to fourth aspects.

For example, the retransmission response signal transmission control section 105 selects the transmission method for limiting transmission of retransmission response signals to the radio base station apparatus 20 (communication control method according to the first aspect). Meanwhile, in the case that the number of SCCs is three or more and that the same radio resources are designated in more than half of the ARI fields, the section 105 selects the transmission method for transmitting retransmission response signals in response to PDSCHs assigned to all CCs using the radio resources designated in more than half of the ARI fields (communication control method according to the second aspect).

Further, in the case of suitably receiving the PDCCH of the PCC, the retransmission response signal transmission control section 105 selects the transmission method for specifying radio resources for a PUCCH in the same manner as in the LTE (Rel. 8) system to transmit only a retransmission response signal in response to a PDSCH assigned to the PCC (communication control method according to the third aspect). Furthermore, the retransmission response signal transmission control section 105 selects the transmission method for transmitting or limiting retransmission response signals according to the flow as shown in FIG. 5 (communication control method according to the fourth aspect).

Moreover, the retransmission response signal transmission control section 105 notifies the ACK/NACK determining section 106 of the selected transmission method of the retransmission response signal, while notifying the ACK/NACK signal coding section 107 of the PUCCH format corresponding to the selected transmission method of the retransmission response signal. For example, in the case of selecting the transmission method for transmitting retransmission response signals in response to PDSCHs assigned to all CCs (communication control method according to the second aspect), the section 105 notifies the ACK/NACK signal coding section 107 of the PUCCH format 3. Meanwhile, in the case of selecting the transmission method for transmitting only a retransmission response signal in response to a PDSCH assigned to the PCC (communication control method according to the third aspect), the section 105 notifies the ACK/NACK signal coding section 107 of the PUCCH format 1 (1a, 1b).

The ACK/NACK determining section 106 determines whether or not the received downlink shared channel (PDSCH) is received without error, and outputs each state of ACK when the PDSCH is received without error, NACK when an error is detected, and DTX when the PDSCH is not detected to the ACK/NACK signal coding section 107 as a determination result (ACK/NACK bit sequence). When a plurality of CCs is assigned to communications with the radio base station apparatus 20, the section 106 determines whether or not the PDSCH is received without error for each CC.

In this case, the ACK/NACK determining section 106 determines whether or not the PDSCH assigned to the CC is received without error based on the transmission method of the retransmission response signal notified from the retransmission response signal transmission control section 105. For example, in the case of receiving notification of the transmission method for limiting transmission of retransmission response signals to the radio base station apparatus 20 (communication control method according to the first aspect), the ACK/NACK determining section 106 does not make the determination whether or not the PDSCH is received without error, and outputs the ACK/NACK bit sequence indicative of the DTX state to the ACK/NACK signal coding section 107.

Meanwhile, in the case of receiving notification of the transmission method for transmitting retransmission response signals in response to PDSCHs assigned to all CCs using radio resources designated in more than half of the ARI fields (communication control method according to the second aspect), the ACK/NACK determining section 106 determines whether or not PDSCHs are received in all CCs without error, and outputs the ACK/NACK bit sequence corresponding to the reception status of each PDSCH to the ACK/NACK signal coding section 107.

Further, in the case of receiving notification of the transmission method for specifying radio resources for a PUCCH in the same manner as in the LTE (Rel. 8) system to transmit only a retransmission response signal in response to a PDSCH assigned to the PCC (communication control method according to the third aspect), the ACK/NACK determining section 106 determines whether or not the PDSCH assigned to the PCC is received without error, and outputs the ACK/NACK bit sequence corresponding to the reception status to the ACK/NACK signal coding section 107.

Furthermore, in the case of receiving notification of the transmission method for transmitting or limiting retransmission response signals according to the flow as shown in FIG. 5 (communication control method according to the fourth aspect), the ACK/NACK determining section 106 determines whether or not the PDSCH assigned to each CC is received without error corresponding to the description of determination as shown in FIG. 5. For example, in the case that the same radio resources are designated in all ARIs (ST501, No) or that the same radio resources are designated in more than half of the ARIs (ST504, Yes), the section 106 determines whether or not PDSCHs are received in all CCs without error, and outputs the ACK/NACK bit sequence corresponding to the reception status of each PDSCH to the ACK/NACK signal coding section 107. In this case, the ACK/NACK determining section 106 outputs the PUCCH format 3 to the ACK/NACK signal coding section 107 as the PUCCH format. Further, in the case that the PDCCH assigned to the PCC is correctly received (ST506, Yes), the section 106 determines whether or not the PDSCH assigned to the PCC is received without error, and outputs the ACK/NACK bit sequence corresponding to the reception status to the ACK/NACK signal coding section 107. In this case, the ACK/NACK determining section 106 outputs the PUCCH format 1 (1a, 1b) to the ACK/NACK signal coding section 107 as the PUCCH format. Meanwhile, in the case that the PDCCH assigned to the PCC is not correctly received (ST506, No), the section 106 does not make the determination whether or not the PDSCH is received without error, and outputs the ACK/NACK bit sequence indicative of the DTX state to the ACK/NACK signal coding section 107.

The ACK/NACK signal coding section 107 codes the determination result (ACK/NACK bit sequence) by the ACK/NACK determining section 106, based on a before hand defined coding table. Further, the ACK/NACK signal coding section 107 outputs the codedACK/NACK bit sequence to the channel coding section 1002 or 1301 of the transmission section, corresponding to the PUCCH format notified from the retransmission response signal transmission control section 105. For example, the section 107 outputs the coded ACK/NACK bit sequence to the channel coding section 1301 in the case of receiving notification of the PUCCH format 3, while outputting the coded ACK/NACK bit sequence to the channel coding section 1002 in the case of receiving notification of the PUCCH format 1 (1a, 1b).

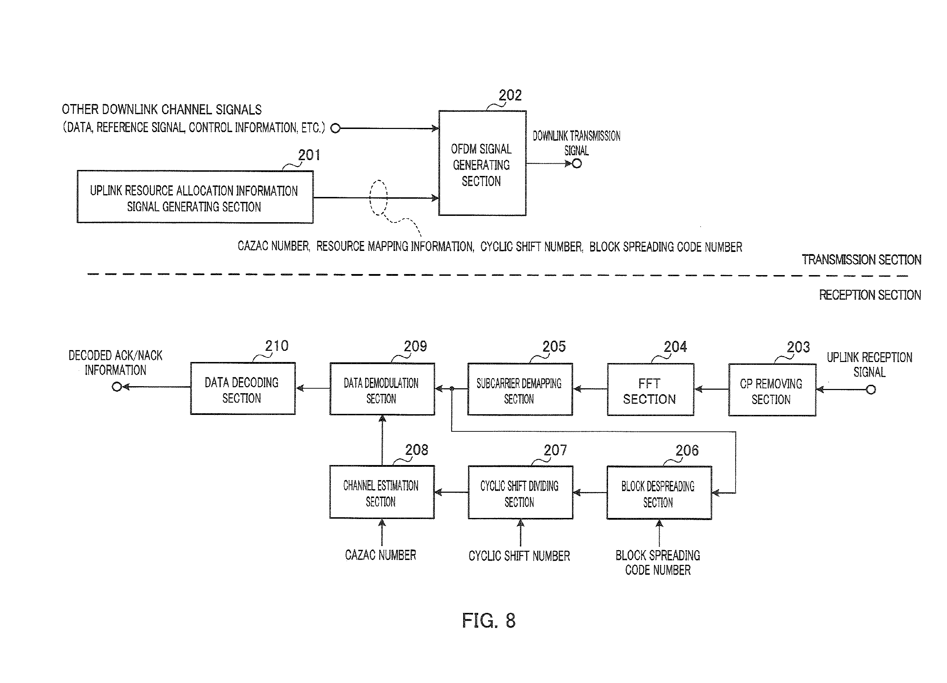

FIG. 8 is a diagram illustrating a schematic configuration of the radio base station apparatus 20 according to this Embodiment. The radio base station apparatus 20 as shown in FIG. 8 is provided with a transmission section and a reception section. The transmission section has an uplink resource allocation information signal generating section 201, and an OFDM signal generating section 202 that multiplexes other downlink channel signals and uplink resource allocation information signal to generate an OFDM signal. Herein, the other downlink channel signals include data, reference signal, control signal, etc.

The uplink resource allocation information signal generating section 201 generates the uplink resource allocation information signal including the CAZAC number, resource mapping information (including RB index and ARI), the cyclic shift number and the block spreading code number (OCC number). The uplink resource allocation information signal generating section 201 outputs the generated uplink resource allocation information signal to the OFDM signal generating section 202.

The OFDM signal generating section 202 maps the downlink signal including the other downlink channel signals and uplink resource allocation information signal to subcarriers, performs Inverse Fast Fourier Transform (IFFT), adds a CP, and thereby generates a downlink transmission signal. Thus generated downlink transmission signal is transmitted to the mobile terminal apparatus 10 in downlink.

The reception section has a CP removing section 203 that removes the CP from a reception signal, an FFT section 204 that performs Fast Fourier Transform (FFT) on the reception signal, a subcarrier demapping section 205 that demaps the FFT-processed signal, a block despreading section 206 that despreads the subcarrier-demapped signal by a block spreading code (OCC), a cyclic shift dividing section 207 that cancels the cyclic shift from the despread signal to divide into a signal of a targeted user, a channel estimation section 208 that performs channel estimation on the demapped signal subjected to user division, a data demodulation section 209 that performs data demodulation on the subcarrier-demapped signal using a channel estimation value, and a data decoding section 210 that performs data decoding on the data-demodulated signal.

The CP removing section 203 removes a portion corresponding to the CP and extracts an effective signal portion. The CP removing section 203 outputs the CP-removed signal to the FFT section 204. The FFT section 204 performs FFT on the reception signal to transform into a signal in the frequency domain. The FFT section 204 outputs the FFT-processed signal to the subcarrier demapping section 205. The subcarrier demapping section 205 extracts an ACK/NACK signal that is an uplink control channel signal from the signal in the frequency domain using the resource mapping information. The subcarrier demapping section 205 outputs the extracted ACK/NACK signal to the data demodulation section 209. The subcarrier demapping section 205 outputs the extracted reference signal to the block despreading section 206.

The block despreading section 206 despreads the reception signal subj ected to block spreading i.e. orthogonal multiplexing using the orthogonal code (OCC) (block spreading code), using the orthogonal code used in the mobile terminal apparatus. The block despreading section 206 outputs the despread signal to the cyclic shift dividing section 207. The cyclic shift dividing section 207 divides the control signal subjected to orthogonal multiplexing using the cyclic shift, using the cyclic shift number. The uplink control channel signal from the mobile terminal apparatus 10 is cyclically shifted with a different cyclic shift amount for each user. Accordingly, by cyclically shifting in the opposite direction by the same cyclic shift amount as the cyclic shift amount performed in the mobile terminal apparatus 10, it is possible to isolate the control signal of the user targeted for the receptionprocessing. The cyclic shift dividing section 207 outputs the signal subjected to user division to the channel estimation section 208.

The channel estimation section 208 divides the reference signal subjected to orthogonal multiplexing using the cyclic shift and orthogonal code, using the cyclic shift number, and when necessary, the OCC number. The channel estimation section 208 performs the cyclic shift in the opposite direction using the cyclic shift amount associated with the cyclic shift number. Further, the section 208 performs despreading using the orthogonal code associated with the OCC number. By this means, it is possible to isolate the signal (reference signal) of the user. Furthermore, the channel estimation section 208 extracts the received reference signal from the signal in the frequency domain using the resource mapping information. Then, the section 208 calculates correlation between the CAZAC code sequence associated with the CAZAC number and the received CAZAC code sequence, and thereby performs channel estimation.

The data demodulation section 209 performs data demodulation on the ACK/NACK signal to output to the data decoding section 210. At this point, the data demodulation section 209 performs data demodulation based on the channel estimation value from the channel estimation section 208. Further, the data decoding section 210 performs data decoding on the demodulated ACK/NACK signal to output as the ACK/NACK information.

Based on the ACK/NACK information, the radio base station apparatus 20 determines transmission of a new PDSCH to the mobile terminal apparatus 10 or retransmission of the transmitted PDSCH. For example, in the case of receiving the ACK/NACK information indicative of the DTX state from the mobile terminal apparatus 10 by the above-mentioned communication control method according to the first aspect or the fourth aspect, the apparatus 20 retransmits the PDSCHs for all CCs. Meanwhile, in the case of receiving the ACK/NACK information corresponding to the reception status of the PDSCHs in all CCs from the mobile terminal apparatus 10 by the above-mentioned communication control method according to the second aspect, corresponding to the reception status indicated by the ACK/NACK information, the apparatus 20 transmits new PDSCHs (when the ACK/NACK information is ACK), or retransmits transmitted PDSCHs (when the ACK/NACK information is NACK). Further, in the case of receiving the ACK/NACK information corresponding to the reception status of the PDSCH in the PCC from the mobile terminal apparatus 10 by the above-mentioned communication control method according to the third aspect, corresponding to the reception status indicated by the ACK/NACK information, the apparatus 20 transmits a new PDSCH (when the ACK/NACK information is ACK), or retransmits the transmitted PDSCH (when the ACK/NACK information is NACK). Meanwhile, the apparatus 20 retransmits the transmitted PDSCH for the SCC. Furthermore, in the case of receiving the ACK/NACK information indicative of ACK/NACK/DTX state from the mobile terminal apparatus 10 by the above-mentioned communication control method according to the fourth aspect, corresponding to the state, the apparatus 20 transmits a new PDSCH (when the ACK/NACK information is ACK), or retransmits the transmitted PDSCH (when the ACK/NACK information is NACK or DTX).

As described above, in the mobile terminal apparatus 10 according to this Embodiment, when different radio resources are included in radio resources designated by ARI fields of PDCCHs in a plurality of SCCs, the apparatus 10 limits transmission of retransmission response signals (ACK/NACK) in response to PDSCHs assigned to all CCs (communication control method according to the first aspect). By this means, in the case where radio resources designated by a plurality of ARI fields differ, retransmission response signals are not transmitted, and therefore, the radio base station apparatus 20 is capable of determining that PDCCHs are correctly not received in all CCs (i.e. is capable of determining DTX). In this case, since the radio base station apparatus 20 retransmits PDSCHs for all CCs, the mobile terminal apparatus 10 is capable of receiving PDSCHs in all CCs again, and is thereby capable of continuing communication operation stably.

Further, when different radio resources are included in radio resources designated by ARI fields of PDCCHs in a plurality of SCCs, in the case that the number of SCCs is three or more and that the same radio resources are designated in more than half of the ARI fields, the mobile terminal apparatus transmits retransmission response signals in response to PDSCHs assigned to all CCs using the radio resources designated in more than half of the ARI fields (communication control method according to the second aspect). By this means, even in the case where radio resources designated by a plurality of ARI fields differ, retransmission response signals in response to PDSCHs assigned to all CCs are transmitted using the radio resources designated by more than half of the ARI fields under certain conditions, and therefore, the radio base station apparatus 20 is capable of determining that PDCCHs of all CCs are correctly received. In this case, since the radio base station apparatus 20 transmits new PDSCHs for all CCs or retransmits transmitted PDSCHs, the mobile terminal apparatus 10 is capable of receiving new PDSCHs or retransmitted PDSCHs in all CCs, and is thereby capable of continuing communication operation stably.

Furthermore, when different radio resources are included in radio resources designated by ARI fields of PDCCHs in a plurality of SCCs, in the case that the PDCCH of the PCC is suitably received, the mobile terminal apparatus specifies radio resources for a PUCCH in the same manner as in the LTE (Rel. 8) system to transmit only a retransmission response signal in response to the PDSCH assigned to the PCC (communication control method according to the third aspect). By this means, even in the case where radio resources designated by a plurality of ARI fields differ, the retransmission response signal in response to the PDSCH assigned to the PCC is transmitted under certain conditions , and therefore, the radio base station apparatus 20 is capable of determining that the PDCCH only of the PCC is correctly received. In this case, since the radio base station apparatus 20 retransmits PDSCHs for all SCCs, the mobile terminal apparatus 10 is capable of receiving PDSCHs in all SCCs again, and is thereby capable of continuing communication operation stably. Further, when the PDSCH of the PCC is suitably received, since the need of retransmission of the PDSCH in the PCC is eliminated, it is possible to improve throughput characteristics as compared with the case of retransmitting PDSCHs for all CCs.

Still furthermore, when different radio resources are included in radio resources designated by ARI fields of PDCCHs in a plurality of SCCs, retransmission response signals are transmitted or limited by combining the communication control methods according to the first to third aspects (communication control method according to the fourth aspect). More specifically, when different radio resources are included in the radio resources designated by ARI fields of PDCCHs in a plurality of SCCs, in the case that the number of SCCs is three or more and that the same radio resources are designated in more than half of the ARI fields, retransmission response signals in response to PDSCHs assigned to all CCs are transmitted using the radio resources designated inmore than half of the ARI fields. Meanwhile, in the case that the number of SCCs is less than three or that the same resources designated in ARI fields are short of the majority, when the PDCCH of the PCC is suitably received, the mobile terminal apparatus specifies radio resources for a PUCCH in the same manner as in the LTE (Rel. 8) system to transmit only a retransmission response signal in response to a PDSCH assigned to the PCC. Further, when the PDCCH of the PCC is not suitably received, the mobile terminal apparatus limits transmission of retransmission response signals in response to PDSCHs assigned to all CCs. By this means, it is possible to continue communication operation stably while varying the transmission aspect of the retransmission response signal flexibly corresponding to the status of radio resources designated by a plurality of ARI fields.

Without departing from the scope of the present invention, the number of processing sections and processing procedures in the above-mentioned descriptions are capable of being carried into practice with modifications thereof as appropriate. Further, each element shown in the figures represents the function, and each functional block may be actualized by hardware or may be actualized by software. Moreover, the invention is capable of being carried into practice with modifications thereof as appropriate without departing from the scope of the invention.

The present application is based on Japanese Patent Application No. 2010-250156 filed on November 8, 2010, entire content of which is expressly incorporated by reference herein.

## Claims

1. A mobile terminal apparatus for performing radio communications with a system band comprised of a plurality of base frequency blocks, comprising:
a determination section configured to determine radio resourcesdesignatedbyARI (ACK/NACK Resource Indicator) fields of downlink control channel signals assigned to the plurality of base frequency blocks; and
a control section configured to control transmission of retransmission response signals in response to downlink shared channel signals assigned to the plurality of base frequency blocks based on the radio resources designated by the ARI fields,
wherein when the radio resources designated by a plurality of the ARI fields include a different radio resource, the control section limits transmission of the retransmission response signals in response to downlink shared channel signals assigned to all the plurality of base frequency blocks.

2. The mobile terminal apparatus according to claim 1, wherein among the radio resources designated by the plurality of the ARI fields, when more than half of the radio resources are the same, the control section transmits retransmission response signals in response to downlink shared channel signals assigned to all the plurality of base frequency blocks using the more than half of the radio resources, while when the same radio resources are short of a majority, limiting transmission of retransmission response signals in response to downlink shared channel signals assigned to the plurality of base frequency blocks.

3. The mobile terminal apparatus according to claim 1, wherein in a case of receiving a downlink control channel signal assigned to a particular base frequency block selected from among the plurality of base frequency blocks, the control section transmits a retransmission response signal in response to a downlink shared channel signal assigned to the particular base frequency block using radio resources associated with the downlink control channel signal, while in a case of not receiving a downlink control channel signal assigned to the particular base frequency block, limiting transmission of retransmission response signals in response to downlink shared channel signals assigned to all the plurality of base frequency blocks.

4. The mobile terminal apparatus according to claim 1, wherein among the radio resources designated by the ARI fields, when more than half of the radio resources are the same, the control section transmits retransmission response signals in response to downlink shared channel signals assigned to all the plurality of base frequency blocks using the more than half of the radio resources, and when the same radio resources are short of a majority, in a case of receiving a downlink control channel signal assigned to a particular base frequency block selected from among the plurality of base frequency blocks, transmits a retransmission response signal in response to a downlink shared channel signal assigned to the particular base frequency block using radio resources associated with the downlink control channel signal, while ina case of not receiving a downlink control channel signal assigned to the particular base frequency block, limiting transmission of retransmission response signals in response to downlink shared channel signals assigned to all the plurality of base frequency blocks.

5. A communication control method in a mobile communication system for performing radio communications with a system band comprised of a plurality of base frequency blocks, comprising:
in a mobile terminal apparatus,
determining radio resources designated by ARI fields of downlink control channel signals assigned to the plurality of base frequency blocks; and
controlling transmission of retransmission response signals in response to downlink shared channel signals assigned to the plurality of base frequency blocks based on the radio resources designated by the ARI fields,
wherein when the radio resources designated by a plurality of the ARI fields include a different radio resource, transmission of retransmission response signals in response to downlink shared channel signals assigned to all the plurality of base frequency blocks is limited.

6. The communication control method according to claim 5, wherein among the radio resources designated by the plurality of the ARI fields, when more than half of the radio resources are the same, retransmission response signals in response to downlink shared channel signals assigned to all the plurality of base frequency blocks are transmitted using the more than half of the radio resources, while when the same radio resources are short of a majority, transmission of retransmission response signals in response to downlink shared channel signals assigned to the plurality of base frequency blocks is limited.

7. The communication control method according to claim 5, wherein in a case of receiving a downlink control channel signal assigned to a particular base frequency block selected from among the plurality of base frequency blocks, a retransmission response signal in response to a downlink shared channel signal assigned to the particular base frequency block is transmitted using radio resources associated with the downlink control channel signal, while in a case of not receiving a downlink control channel signal assigned to the particular base frequency block, transmission of retransmission response signals in response to downlink shared channel signals assigned to all the plurality of base frequency blocks is limited.

8. The communication control method according to claim 5, wherein among the radio resources designated by the plurality of the ARI fields, when more than half of the radio resources are the same, retransmission response signals in response to downlink shared channel signals assigned to all the plurality of base frequency blocks are transmitted using the more than half of the radio resources, and when the same radio resources are short of a majority, in a case of receiving a downlink control channel signal assigned to a particular base frequency block selected from among the plurality of base frequency blocks, a retransmission response signal in response to a downlink shared channel signal assigned to the particular base frequency block is transmitted using radio resources associated with the downlink control channel signal, while in a case of not receiving a downlink control channel signal assigned to the particular base frequency block, transmission of retransmission response signals in response to downlink shared channel signals assigned to all the plurality of base frequency blocks is limited.

9. A mobile terminal apparatus for performing radio communications with a system band comprised of a plurality of base frequency blocks, comprising:
a determination section configured to determine radio resources designated by ARI fields of downlink control channel signals assigned to the plurality of base frequency blocks; and
a control section configured to control transmission of retransmission response signals in response to downlink shared channel signals assigned to the plurality of base frequency blocks when the radio resources designated by the ARI fields include a different radio resource,
wherein among the radio resources designated by a plurality of the ARI fields, when more than half of the radio resources are the same, the control section transmits retransmission response signals in response to downlink shared channel signals assigned to all the plurality of base frequency blocks using the more than half of the radio resources.

10. A mobile terminal apparatus for performing radio communications with a system band comprised of a plurality of base frequency blocks, comprising:
a determination section configured to determine radio resources designated by ARI fields of downlink control channel signals assigned to the plurality of base frequency blocks; and
a control section configured to control transmission of retransmission response signals in response to downlink shared channel signals assigned to the plurality of base frequency blocks when the radio resources designated by a plurality of the ARI fields include a different radio resource,
wherein in a case of receiving a downlink control channel signal assigned to a particular base frequency block selected from among the plurality of base frequency blocks, the control section transmits a retransmission response signal in response to a downlink shared channel signal assigned to the particular base frequency block using radio resources associated with the downlink control channel signal.
